# EUROPEAN PATENT SPECIFICATION

(11) **EP 0 826 455 B1**
(45) Date of publication and mention of the grant of the patent: **12.04.2000**
(21) Application number: 97810612.8
(22) Date of filing: 29.08.1997
(51) Int. Cl.: B23H 1/00, B23H 7/26

(54) **Automatic pincer for electroerosion electrodes**
Automatische Greifvorrichtung für Funkenerosionselektroden
Dispositif de maintien automatique pour électrodes d'électroérosion

(30) Priority: 03.09.1996 CH 216496
(43) Date of publication of application: 04.03.1998
(73) Proprietor: Sarix S.A., 6616 Losone (CH)
(72) Inventor: Salim, Ehsan, 6616 Losone (CH); Rigamonti, Giorgio, 6604 Locarno (CH)
(74) Representative: Fiammenghi-Domenighetti, Delfina

(56) References cited:
- EP-A- 0 129 340
- EP-A- 0 286 779

## Description

This invention relates to the area of devices for electroerosion, in particular those devices which make microperforations or make holes with a diameter less than 0.3 mm.

To make these microperforations the electrodes for electroerosion used are held up by special supports commonly called "pincers", which cause the electrodes to rotate around their axis and which keep these electrodes perfectly coaxial, or with their longitudinal axis coincident with the longitudinal axis of the pincers which support them.

Unfortunately, these pincers of current design do not work as well in practice as they do in theory, because the working tolerances of the electrodes and of the various parts which comprise a pincer--though low individually--collectively add up to an error which is of too high a percentage for holes with the aforementioned diameter less than 0.3 mm.

Pincers according to the prior art are comprised of an external casing, an inside sheath made of a metal with a high elasticity, and an electrode for electroerosion situated coaxially between the two. The pincer also has means which allow the electrode to be locked and unlocked in its sheath so as to enable the required feed.

These means generally are comprised of a screw which screws perpendicularly to the pincer casing, presses against this sheath in an area in which the latter, cut in such a way as to be elastically pliable, presses in turn against the electrode, locking it.

Periodic screwing and unscrewing of a screw at the end of each electroerosion work cycle (a cycle with generally lasts between 3 seconds and a few minutes) requires that the work cycle be stopped, with associated downtimes and fitting times.

In the example of prior art described by patent application EP 0 286 779, an automatic pincers is provided with means for exerting on its sheath a pressure perpendicular to the longitudinal axis of its external casing, but such means, unlike those according to the present invention, are not such to guarantee and maintain a precise coaxiality between the electrode and said sheath.

The inventor of this invention has devised pincers for electroerosion electrodes which eliminates these disadvantages (lack of precision and long fitting times) and which has a number of additional advantages which shall be described below.

In particular, the object of this invention is automatic pincers for supporting electrodes in an electroerosion device according to the preamble of appended claim 1, characterized by the characterizing portion of this latter.

Below is a more detailed description of a preferred embodiment of these pincers, in which references are made to attached diagrams which show the following:
Fig. 1 shows a lateral view with longitudinal partial cross-section of this embodiment of the pincers according to the invention;
Fig. 2 shows the same view as in Fig. 1, but expanded and limited to only one part of the end of these pincers.

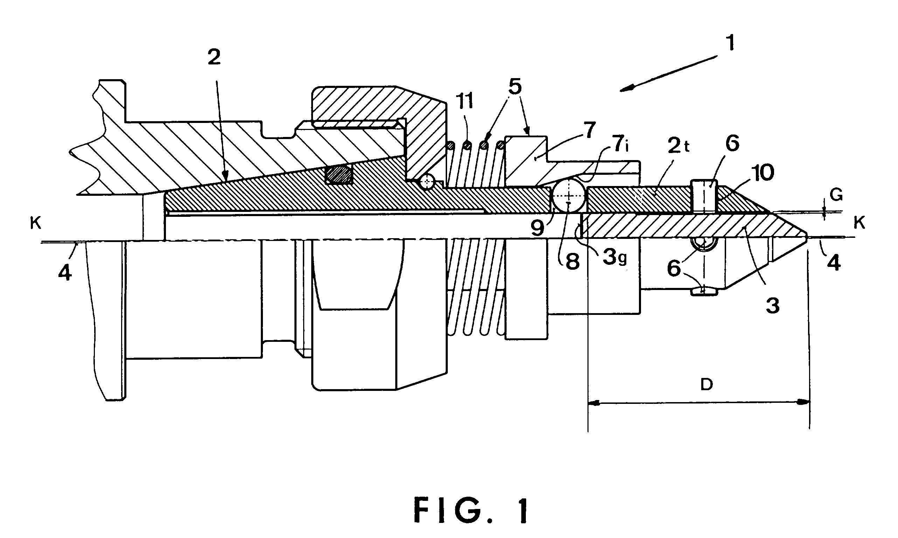

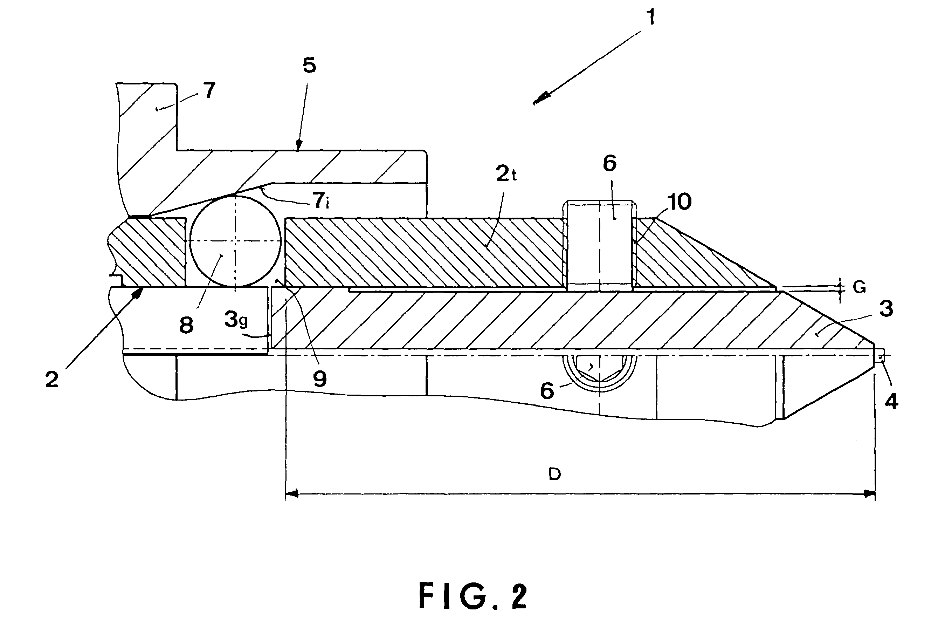

It should be pointed out that in Figs. 1 and 2, between the area marked 2t of external casing 2 and the sheath 3 in which the electrode is coaxially situated, there is a certain amount of play (0.1 mm is recommended).

A plurality (the diagram shows four) of threaded pins 6, screwing into the same number of threaded holes 10--which pass entirely through and which are arranged radially on terminal part 2t of external casing 2--press on the external surface of sheath 3, and as a function of their penetration, bend this sheath in a predetermined direction and to a predetermined extent, and therefore also bend electrode 4 contained in this sheath, in such a way as to keep longitudinal axis K-K of this electrode 4 perfectly aligned with external casing 2, correcting thereby all distortions and errors of various types which as mentioned above generally cause a not insignificant deviation in the relative coaxial positions of the casing and electrode 4.

Penetration of pin 6 is obviously adjusted by simultaneous microscopic monitoring of the direction of longitudinal axis K-K of electrode 4, thereby obtaining high precision of the microperforations made by electroerosion by cyclic feed and continuous rotation of the electrode.

The inventor has also conceived a much-improved design for device 5 which locks and unlocks electrode 4 to allow periodic feed. In this embodiment at least one part of sheath 3 has notches 3g (generally three perpendicular to one another) capable of making that part elastically pliable, but pressure on that part and the corresponding pressure on un-notched parts of sheath 3, instead of the threaded members which current pincers have, is exerted by three spheres 8, wherein the spheres press, by the action of a spring 11, an inclined surface of rotation 7i (shown as a truncated cone) formed inside ring 7 coaxially external to external casing 2.

These three spheres 8 are accommodated in an equal number of seats 9 which penetrate completely and which are arranged radially in this same external casing 2.

This design makes it possible to lock electrode 4 in sheath 3 while maintaining optimum centering conditions, ensuring that electrode 4 and external casing 2 remain virtually coaxial relative to one another and at the locking point of electrode 4, and thereby allowing easy automation of electrode 4 locking and unlocking operations, using a known system (for example, a fork actuated by a lever or a cam) to cyclically slide ring 7 in an axial direction, overcoming the force exerted by spring 11 to unlock electrode 4, and ceasing instead to oppose the electrode locking action within sheath 3. These systems are not shown in the diagrams because they are obvious to one skilled in the art of machine tools.

Any slight defects of alignment between the various axes can therefore be ultimately corrected by making the terminal part of pincers 1, already described above, with length D of at least 12 mm beginning from the outermost part of sphere 8 of this device 5 for locking of electrode 4.

The inventor of these pincers, in order to be able to reach parts of the workpiece (not shown) inaccessible to current pincers, has also designed the ends of the terminal parts of external casing 2 and of sheath 3 to have a tapered shape (substantially conical in the figure here).

## Claims

1. Automatic pincers (1) for supporting electrodes in an electroerosion device especially suitable for making microperforations, said pincers comprising external casing (2) and inside coaxial sheath (3) made of a metal with high elasticity, in which sheath is coaxially inserted electrode (4), said pincers (1) being equipped with device (5) for reversible locking of this electrode (4) in this sheath (3), a predetermined play (6) existing between terminal section (2t) of said casing (2) and the corresponding terminal section of said sheath (3) coaxially contained therein, and terminal section (2t) of external casing (2) having means (6) for exerting on sheath (3) a pressure perpendicular to the longitudinal axis of external casing (2), in such a way as to bend it to a predetermined degree so as to keep longitudinal axis (K-K) of electrode (4) contained therein aligned with the longitudinal axis of said external casing (2), characterized in that the said device (5) for reversible locking of electrode (4) in sheath (3) is comprised of ring (7) coaxially external to external casing (2), actuated by spring (11) to press with an inclined surface of rotation (71) located inside it, three spheres (8) accommodated in an equal number of seats (9) which penetrate completely and which are arranged radially in external casing (2) and rest against the outer surface of said sheath (3), which has notches (3s) corresponding to at least one of said spheres (8) capable of making at least one of its parts elastically pliable.

2. Pincers as claimed in claim 1, wherein said means capable of exerting on sheath (3) a pressure perpendicular to the longitudinal axis of external casing (2) are a plurality of threaded members (6) screwed into holes which penetrate completely (10) and which are arranged radially on terminal part (2t) of said external casing (2).

3. Pincers as claimed in any of the preceding claims, wherein said terminal part (2t) of external casing (2) extends by length (D) which is at least 12 mm beginning from the outermost part of spheres (8) of this device (5) for reversibly locking of electrode (4) in sheath (3).

4. Pincers as claimed in any of the preceding claims, wherein the ends of the terminal parts of external casing (2) and of sheath (3) have a shape tapered towards the workpiece.

## Patentansprüche

1. Automatische Zange (1) zum Stützen von Elektroden in einer sich besonders zur Herstellung von Mikroperforationen eignenden Elektroerosionseinrichtung, wobei die Zange ein Außengehäuse (2) und eine aus einem Metall mit hoher Elastizität hergestellte Innenkoaxialhülse (3) umfaßt, wobei in der Hülse koaxial eine Elektrode (4) eingesetzt ist, wobei die Zange (1) mit einer Einrichtung (5) zum umkehrbaren Verriegeln dieser Elektrode (4) in dieser Hülse (3) ausgestattet ist, wobei zwischen einem Anschlußabschnitt (2t) des Gehäuses (2) und dem darin koaxial enthaltenen entsprechenden Anschlußabschnitt der Hülse (3) ein vorbestimmtes Spiel (G) vorliegt und der Anschlußabschnitt (2t) des Außengehäuses (2) ein Mittel (6) aufweist, um auf die Hülse (3) einen Druck senkrecht zur Längsachse des Außengehäuses (2) auszuüben, so daß sie zu einem vorbestimmten Grad gebogen wird, damit die Längsachse (K-K) der darin enthaltenen Elektrode (4) mit der Längsachse des Außengehäuses (2) ausgerichtet gehalten wird, dadurch gekennzeichnet, daß die Einrichtung (5) zum umkehrbaren Verriegeln der Elektrode (4) in der Hülse (3) einen koaxial außerhalb des Außengehäuses (2) liegenden Ring (7) umfaßt, der durch eine Feder (11) betätigt wird, um mit einer darin angeordneten geneigten Rotationsfläche (7i) drei in einer gleichen Anzahl von Sitzen (9) aufgenommene Kugeln (8) zu drücken, die das Außengehäuse (2) vollständig durchsetzen, in ihm radial angeordnet sind und an der Außenfläche der Hülse (3) anliegen, die Kerben (3s) aufweist, mindestens einer der Kugeln (8) entsprechend und in der Lage, mindestens eines ihrer Teile elastisch nachgiebig zu machen.

2. Zange nach Anspruch 1, wobei das Mittel, das in der Lage ist, auf die Hülse (3) einen Druck senkrecht zur Längsachse des Außengehäuses (2) auszuüben, mehrere mit einem Gewinde versehene Glieder (6) sind, die in Löcher geschraubt sind, die das Anschlußteil (2t) des Außengehäuses (2) vollständig durchsetzen (10) und radial an ihm angeordnet sind.

3. Zange nach einem der vorhergehenden Ansprüche, wobei das Anschlußteil (2t) des Außengehäuses (2) sich um eine Länge (D) erstreckt, die mindestens 12 mm beträgt, beginnend bei dem äußersten Teil der Kugeln (8) dieser Einrichtung (5) zum umkehrbaren Verriegeln der Elektrode (4) in der Hülse (3).

4. Zange nach einem der vorhergehenden Ansprüche, wobei die Enden der Anschlußteile des Außengehäuses (2) und der Hülse (3) eine in Richtung des Werkstücks verjüngte Form aufweisen.

## Revendications

1. Pinces automatiques (1) destinées à supporter des électrodes dans un dispositif d'électroérosion particulièrement adapté pour réaliser des microperforations, lesdites pinces comprenant une enveloppe externe (2) et un manchon coaxial intérieur (3) en métal de grande élasticité, manchon dans lequel est insérée coaxialement une électrode (4), lesdites pinces (1) étant équipées d'un dispositif (5) de verrouillage réversible de cette électrode (4) dans ce manchon (3), un jeu prédéterminé (6) existant entre une section terminale (2t) de ladite enveloppe (2) et la section terminale correspondante dudit manchon (3) contenu coaxialement dans celle-ci, et la section terminale (2t) de l'enveloppe externe (2) étant dotée de moyens (6) destinés à exercer sur le manchon (3) une pression perpendiculaire à l'axe longitudinal de l'enveloppe externe (2), de manière à la courber à un degré prédéterminé afin de maintenir l'axe longitudinal (K-K) de l'électrode (4) contenue dans celle-ci alignée par rapport à l'axe longitudinal de ladite enveloppe externe (2), caractérisées en ce que ledit dispositif (5) de verrouillage réversible de l'électrode (4) dans le manchon (3) est constitué d'une bague (7) externe, coaxialement, à l'enveloppe externe (2), actionnée par un ressort (11) pour exercer une pression avec une surface de rotation inclinée (7i) située à l'intérieur de celle-ci, trois sphères (8) reçues dans un nombre identique de sièges (9) pénétrant complètement et disposées radialement dans l'enveloppe externe (2) et reposant contre la surface extérieure dudit manchon (3), muni d'encoches (3g) correspondant à l'une au moins desdites sphères (8) capables de rendre l'une au moins de ses parties élastiquement pliable.

2. Pinces selon la revendication 1, dans lesquelles lesdits moyens capables d'exercer sur le manchon (3) une pression perpendiculaire à l'axe longitudinal de l'enveloppe externe (2) sont une pluralité d'éléments filetés (6) vissés dans des trous (10) pénétrant complètement et disposés radialement sur la partie terminale (2t) de ladite enveloppe externe (2).

3. Pinces selon l'une quelconque des revendications précédentes, dans lesquelles ladite partie terminale (2t) de l'enveloppe externe (2) s'avance d'une longueur (D) représentant au moins 12 mm en partant de la partie la plus à l'extérieur des sphères (8) de ce dispositif (5) de verrouillage réversible de l'électrode (4) dans le manchon (3).

4. Pinces selon l'une quelconque des revendications précédentes, dans lesquelles les extrémités des parties terminales de l'enveloppe externe (2) et du manchon (3) présentent une forme allant en s'amincissant vers la pièce à traiter.
